# EUROPÄISCHE PATENTSCHRIFT

(11) **EP 1 376 971 B1**
(45) Veröffentlichungstag und Bekanntmachung des Hinweises auf die Patenterteilung: **24.08.2005**
(21) Anmeldenummer: 02014374.9
(22) Anmeldetag: 27.06.2002
(51) Int. Cl.: H04L 27/26

(54) **Verfahren und Vorrichtung zum Übertragen einer Datenfolge mit Schutzabschnitt und Nutzdatenabschnitt in einem Funk-Kommunikationssystem**
Method and apparatus for transmission of a data sequence with a protection portion and a paylod portion in a radio communication system
Méthode et dispositif pour la transmission d'une séquence de données avec une partie de données de protection et une partie de données utiles dans un système de radiocommunication

(43) Veröffentlichungstag der Anmeldung: 02.01.2004
(73) Patentinhaber: SIEMENS AKTIENGESELLSCHAFT, 80333 München (DE)
(72) Erfinder: Drascher, Thorsten, 58093 Hagen (DE); Kern, Ralf, 46399 Bocholt (DE)

(56) Entgegenhaltungen:
- WO-A-00/60804
- US-A- 6 115 354
- US-B1- 6 266 348
- US-B1- 6 339 599

## Beschreibung

Die Erfindung bezieht sich auf ein Verfahren zum Übertragen einer Datenfolge mit Schutzabschnitt und Nutzdatenabschnitt in einem Funk-Kommunikationssystem mit den oberbegrifflichen Merkmalen des Patentanspruchs 1 bzw. eine Vorrichtung zum Durchführen eines solchen Verfahrens.

In Funk-Kommunikationssystemen, wie beispielsweise GSM (Global System for Mobil Communication), UMTS (Universal Mobil Telecommunication System) oder HiperLAN bzw. H2 als lokales Datennetz werden Informationen, beispielsweise Sprache, Bildinformationen oder andere Daten, mit Hilfe von elektromagnetischen Wellen über eine Funkschnittstelle zwischen sendender und empfangender Station übertragen. Die über die Funkschnittstelle kommunizierenden Stationen sind üblicherweise einerseits eine mobile Teilnehmerstation bzw. ein mobiler Computer und andererseits eine netzseitige, ortsfeste Station. Die netzseitige Station leitet Daten zu bzw. von weiteren Netzeinrichtungen weiter, wobei die netzseitigen Einrichtungen entsprechend dem Kommunikationssystem ausgebildet sind. Außerdem sind selbstorganisierende dezentrale Kommunikationssysteme bekannt. Bei der Erstellung einer Datenfolge wird ein Schutzintervall vor dem eigentlichen Datenintervall eingesetzt, um eine Zwischen-Symbol-Interferenz (ISI: Inter Symbol Interference) zwischen benachbarten OFDM-Symbolen zu vermeiden.

Bei der Technologie für lokale Funkdatennetze (WLAN: Wireless Local Area Network), H2 (HiperLAN Typ 2), gibt es derzeit einen ersten Satz Standards, wobei der Schwerpunkt für Anwendungen bei H2 innerhalb von Gebäuden oder Büros mit einer sehr geringen Mobilität bzw. Tragbarkeit der teilnehmerseitigen Stationen gesehen wird. H2 beruht auf einem Multiplex-Verfahren mit orthogonaler Frequenzteilung (OFDM: Orthogonal Frequency Division Multiplex).

Auch bei Kommunikationssystemen der vierten Generation sind Vielfachzugriffsverfahren mit OFDM-Übertragungssystemen geplant. Diese ordnen die Teilnehmerdaten bzw. Daten von jeweils bestimmten Datenquellen einer Anzahl von Trägern oder Sub-Trägern zu. Bei beispielsweise OFDM-FDMA (FDMA: Frequency Division Multiple Access) stellen die Subträger einzelne jeweils zueinander benachbarte Frequenzbänder eines größeren Frequenzbereiches dar. Bekannt ist z.B. auch, die Teilnehmerdaten bzw. Userdaten jeweils einer Anzahl OFDM-Symbole exklusiv zuzuordnen, wie bei OFDM-TDMA (TDMA: Time Division Multiple Access). Dabei werden die Teilnehmerdaten in dem OFDM-Symbol für die Übertragung über die Schnittstelle zwischen verschiedenen Kommunikationsstationen zeitlich aufeinander abfolgend angeordnet, insbesondere werden die Teilnehmerdaten einer Station jeweils einem oder mehreren der OFDM-Symbole direkt aufeinander folgend zugeordnet. Bei beiden Vielfachzugriffsverfahren werden Mehrfachzugriff-Interferenzen (MAI: Multiple Access Interferences) vermieden.

Gemäß einer alternativen Verfahrensweise können die Teilnehmerdaten durch die Verwendung orthogonaler Codes mit Hilfe einer orthogonalen Matrix über eine vorgegebene Anzahl von Subträgern und/oder OFDM-Symbole gespreizt werden, wie bei dem unter OFDM-CDMA bzw. MC-CDMA (CDMA: Code Division Multiple Access; MC: Multiple Carrier) bekannten Verfahren. Bei dem OFDM-CDMA-Verfahren werden die Daten mehrerer, bestimmter Teilnehmer oder Dienste bestimmten Frequenzen zugeordnet, wobei Codes zur Trennung verwendet werden.

Aus US 6,339,599 B1 ist ein Verfahren bekannt, bei dem ein Zeitstempel zu Beginn eines Datenpakets, welches weiterhin ein Identifikationssignal zur Identifikation einer Kommunikationsstation sowie Zugriffsdaten für einen zufallsgesteuerten Zugriff beinhaltet, übertragen wird, wobei sowohl der Zeitstempel als auch das Identifikationssignal jeweils durch ein sinusförmiges Signal dargestellt werden können.

Eine Aufgabe der Erfindung besteht darin, die Flexibilität bezüglich dem Aufbau zu übertragender Datenfolgen in einem insbesondere OFDM-basierten Kommunikationssystem zu erhöhen.

Diese Aufgabe wird durch ein Verfahren zum Übertragen einer Datenfolge in einem Funk-Kommunikationssystem mit den Merkmalen des Patentanspruchs 1 sowie durch eine Vorrichtung mit den Merkmalen des Patentanspruchs 9 gelöst. Vorteilhafte Ausgestaltungen sind Gegenstand abhängiger Ansprüche.

Bei der Lösung wird von einem für sich bekannten Verfahren zum Übertragen einer Datenfolge in einem Kommunikationssystem über eine Schnittstelle zwischen einer senderseitigen und einer empfängerseitigen Station ausgegangen, bei dem die Datenfolge aus zumindest einem Schutzabschnitt, auch als Schutzperiode oder Schutzintervall bezeichnet, und aus zumindest einem Nutzdatenabschnitt mit Nutzdaten, auch als Userdaten, Teilnehmerdaten oder senderseitigen Daten bezeichnet, erstellt wird. Beim Erstellen der Datenfolge wird zumindest ein für die Anwendung und/oder die Situation spezifischer Parameter verwendet. Letzterer kann beispielsweise ein bestimmter OFDM-Code, eine Dauer des Schutzabschnitts und des Nutzdatenabschnitts oder des diese aufnehmenden Übertragungsrahmens sein. Die Flexibilität bezüglich dem Aufbau zu Übertragender Datenfolgen wird vorteilhafterweise dadurch gegeben, das senderseitig in den Schutzabschnitt dem Parameter zugeordnete Signalisierungsdaten eingesetzt werden, wobei diese empfängerseitig für die Verarbeitung der Datenfolge verwendet werden.

Die Signalisierungsdaten sind zweckmäßigerweise den verwendeten Parametern zugeordnet, wobei empfängerseitig zur Verarbeitung der empfangenen Datenfolge ein Rückschluss auf die verwendeten Parameter anhand der Signalisierungsdaten vorgenommen wird.

Eine Vielzahl verschiedenartigster Parameter bei der Erstellung der Datenfolge kann auf diese Art und Weise gekennzeichnet und signalisiert werden. Die Zuordnung der Signalisierungsdaten zu den verschiedenen möglichen Parametern kann dabei ebenfalls auf vielfältige Art und Weise erfolgen. Besonders einfach ist eine Zuordnung der Dauer bzw. Länge der Signalisierungsdaten innerhalb der Datenfolge zu verschiedenen Parametern, so dass z.B. eine kurze Signalisierungsdatendauer auf einen ersten Parameter und eine lange Signalisierungsdatendauer auf einen zweiten Parameter u.s.w. hinweist. Empfängerseitig muss in diesem Fall lediglich die Dauer bzw. Länge der Signalisierungsdaten innerhalb der Datenfolge bestimmt werden, um daraus auf die verwendeten Parameter zu schließen. Zweckmäßigerweise werden dafür Signalisierungsdaten in einer gleichmäßigen kontinuierlichen Folge verwendet, beispielsweise in Form einer Sinuskurve, Dreieckkurve oder Rechteckkurve. Bei letzteren kann vorteilhafterweise auch die Frequenz einer solchen Kurve verwendet werden, um auf verschiedene Parameter zusätzlich oder alternativ zu der Dauer der aufeinander folgenden Signalisierungsdaten hinzuweisen.

Noch einfacher ist die empfängerseitige Bestimmung der Signalisierungsdaten zweier aufeinanderfolgender Datenfolgen, da dadurch die Länge bzw. Dauer der Datenfolge einfach ermittelbar ist.

Bei einem solchen Signalisierungsverfahren muss im einfachsten Fall nicht einmal eine Standardisierung für die Umsetzung in einem Kommunikationssystem erfolgen, da es ausreicht, wenn einzelne üblicherweise miteinander kommunizierende Stationen mit den Zusatzinformationen für die Durchführung des Verfahrens ausgestattet werden.

Die Signalisierungsdaten können alternativ zu einem regelmäßigen Signalverlauf auch eine Codefolge aufweisen, welche bestimmten Parametern zugeordnet wird. Besonders vorteilhaft ist die Umsetzung, wenn die Zuordnungsbedingungen Kommunikationssystem-weit definiert, insbesondere standardisiert werden.

Als Parameter, welcher bei der Erstellung der Datenfolge berücksichtigt wird, wird die Dauer oder Länge des Nutzdatenabschnitts oder der Folge der Nutzdaten bestimmt. Entsprechendes gilt auch für die Dauer oder Länge des Gesamtenübertragungsrahmens oder die Aufteilung innerhalb des Übertragungsrahmens zwischen Anteilen des Schutzabschnitts und des Nutzdatenabschnitts. Vorteilhaft ist auch eine Zuordnung der verschiedenen möglichen Signalisierungsdaten zu verwendeten Codierungen als Parameter, insbesondere zu der Verwendung eines bestimmten Codes.

Vorteilhafterweise werden entsprechende Vorrichtungen bereit gestellt, mit denen eine Kommunikation unter Verwendung eines solchen Verfahrens möglich ist. Eine solche Vorrichtung für ein Kommunikationssystem weist insbesondere eine Steuereinrichtung, eine Speichereinrichtung und eine Sende- und/oder Empfangseinrichtung zum Übertragen einer Datenfolge über eine Schnittstelle zu einer entfernten Station auf, wobei über die Schnittstelle eine Datenfolge aus zumindest einem Schutzabschnitt und zumindest einem Nutzdatenabschnitt mit Nutzdaten übertragen wird. Zur Umsetzung des vorteilhaften Verfahrens wird in der Speichereinrichtung Speicherraum für eine Zuordnungstabelle zwischen bei der Datenfolgenerstellung zu verwendenden Parametern und zugeordneten Signalisierungsdaten oder Erstellungsangaben dafür bereitgestellt, wobei die Signalisierungsdaten beim Erstellen einer Datenfolge in zumindest einen Teil des Schutzabschnitts einzusetzen sind.

Ein Ausführungsbeispiel wird nachfolgend anhand der Zeichnung näher erläutert. Es zeigen:
- Fig. 1: schematisch Einrichtungen eines Funk-Kommunikationssystems;

- Fig. 2: eine Datenfolge mit Schutz- und Datenabschnitt zur Übertragung von Daten in einem solchen Funk-Kommunikationssystem,
- Fig. 3: beispielhafte Datenfolgen für drei verschiedene Szenarien.

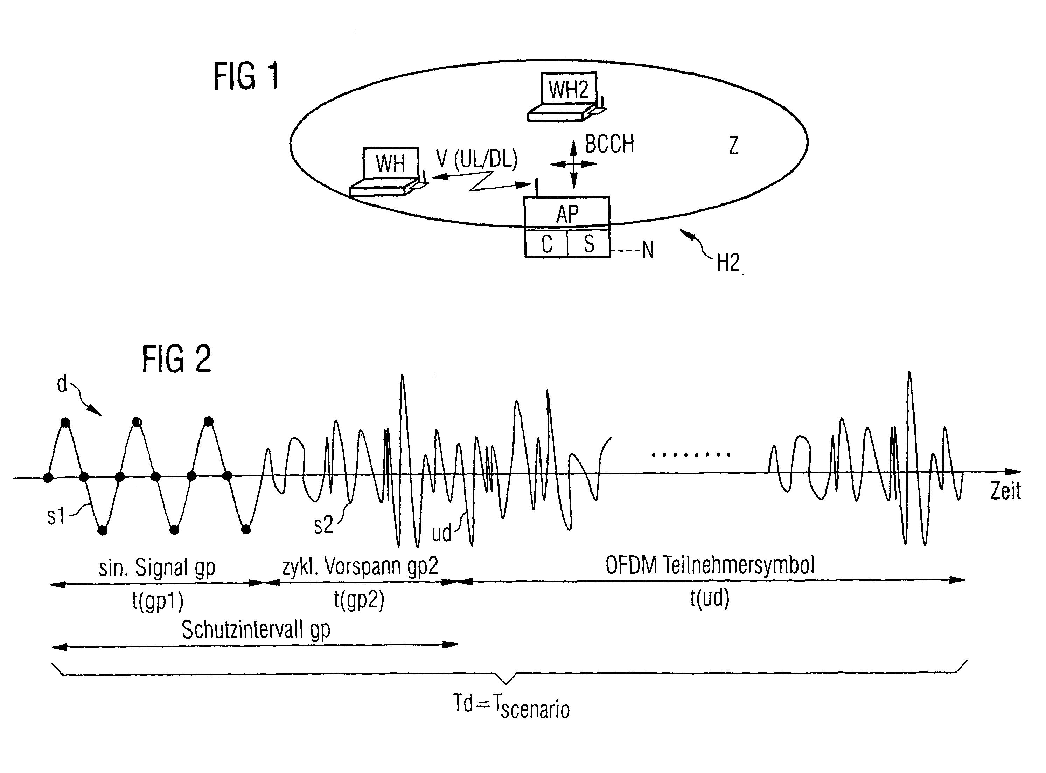

Bei einem beispielhaften Kommunikationssystem H2, hier einem H2-Funk-Kommunikationssystem als lokalem, funkgestütztem Datennetz, wie dies in Fig. 1 skizziert ist, kommuniziert eine Vielzahl verschiedenartigster Einrichtungen miteinander. Als ortsfeste Zugriffsstation dient bei einem solchen Datennetz ein Zugriffspunkt AP, der eine Steuereinrichtung C, eine Speichereinrichtung S und weitere für den Betrieb erforderliche Einrichtungen und Module mit entsprechenden Softwarefunktionen aufweist. Ein Teil dieser Einrichtungen, Module und Softwarefunktionen kann bei einem Datennetz auch in andere Einrichtungen ausgelagert sein, wobei dann eine Verbindung zu weiteren Netzeinrichtungen N besteht.

Der Zugriffspunkt AP baut zumindest eine Funkzelle Z auf, wobei insbesondere bei Verwendung von sektorisierten Antennen auch mehrere Funkzellen Z aufgebaut werden können. Innerhalb dieser Funkzelle Z können stationäre oder mobile teilnehmerseitige Stationen WH, WH2 mit dem Zugriffspunkt AP kommunizieren. Einerseits sendet der Zugriffspunkt über Nachrichten- bzw. Rundfunkkanäle BCCH (Broad Cast CHannel) Informationen an die in seiner Funkzelle Z befindlichen Stationen WH, WH2, z.B. mobile funkgestützte Terminals, aus. Andererseits können direkte Verbindungen V zwischen dem Zugriffspunkt AP und einer jeweils einzelnen der Stationen WH aufgebaut werden. Über diese Verbindungen V, die eine direkte Funkschnittstelle ausbilden, werden Daten in Aufwärtsrichtung UL bzw. Abwärtsrichtung DL ausgetauscht. Die Trägerfrequenz der Funkschnittstelle V liegt im Fall von H2 bei 5-6 GHz.

Anstelle der Anwendung bei einem solchen H2-Kommunikationssystem kann das beschriebene Verfahren auch auf andere Kommunikationssysteme übertragen werden. Eine Übertragung kann auch über rein netzgestützte Kommunikationssysteme erfolgen, die nur leitungsgebundene Schnittstellen aufweisen. Möglich ist der Einsatz auch bei sogenannten Ad-hoc-Netzen, die sich spontan und dezentral selbst organisieren.

Wie aus Fig. 2 ersichtlich, werden die Daten jeweils senderseitig in eine Datenfolge d eingesetzt, wobei jeweils ein Schutzintervall bzw. Schutzabschnitt gp und ein Nutzdatenintervall bzw. -abschnitt mit Nutzdaten ud aufeinander folgend in die Datenfolge d eingesetzt werden. Eine Vielzahl solcher Datenfolgen d bilden einen Datenstrom, der zu einer anderen Station übertragen wird. In der Datenfolge d angeordnet werden die Daten von der sendenden Station, dass heißt je nach Übertragungsrichtung entweder von dem Zugriffspunkt AP oder der mobilen Station WH. Danach erfolgt eine Übertragung über die Funkschnittstelle V zu der empfangenden Station, dass heißt umgekehrt entweder der mobilen Station WH oder dem Zugriffspunkt AP. In dieser empfangenden Station WH bzw. AP werden die empfangenen Daten aufbereitet und optional an andere Einrichtungen zur Weiterverarbeitung übergeben.

In Fig. 2 ist in der oberen Hälfte die Datenfolge d kontinuierlich dargestellt, wie sie letztendlich über die Schnittstelle V übertragen wird. Bei der Erstellung der Datenfolge d wird üblicherweise ein digitales Verfahren verwendet. In der unteren Hälfte von Fig. 2 sind jeweils die einzelnen Anteile der Datenfolge d als Schutzabschnitt gp bzw. als Nutzdatenabschnitt mit den Nutzdaten ud gekennzeichnet. Die Länge bzw. Gesamtdauer T_{scenario} der Datenfolge ergibt sich aus der Dauer t(gp) des Schutzabschnitts und der Dauer t(ud) des Nutzdatenabschnitts.

Bei der dargestellten Ausführungsform besteht der Schutzabschnitt gp wiederum aus zwei Unterabschnitten gp1, gp2, in welchen einerseits ein Signalisierungssignal bzw. Signalisierungsdaten s1 und andererseits ein zusätzliches Signal s2 eingesetzt worden sind. Der Schutzabschnitt gp ist somit in zwei Unterabschnitte gp1, gp2 unterteilt. Theoretisch ist es aber auch möglich, die gesamte Dauer t(gp) des Schutzabschnitts gp mit Signalisierungsdaten s1 zu füllen.

Bei dem dargestellten Ausführungsbeispiel ist es in vorteilhafter Weise möglich, empfängerseitig aus der Dauer bzw. Länge der Signalisierungsdaten s1 im ersten Unterabschnitt gp1 des Schutzabschnitts gp auf die beim Erstellen der Datenfolge d verwendeten Parameter zu schließen.

Das Ende der Signalisierungsdaten s1 ist empfängerseitig besonders einfach zu erkennen, wenn die Signalisierungsdaten s1 einen gleichmäßigen Signalisierungsverlauf haben, beispielsweise eine sinusförmige Amplitude beschreiben, während in dem zweiten Unterabschnitt gp2 ein zusätzliches Signal s2 mit einem anderen Aufbau oder einem durchgehenden Nullwert enthalten ist. Einfache alternative Formen für das Signalisierungssignal s1 wären beispielsweise ein Sägezahnmuster, eine Dreieckform oder eine Rechteckform.

Bei einer Codierung gemäß OFDM werden in dem Schutzabschnitt gp üblicher Weise Anteile der Nutzdaten ud redundant als zyklischer Vorspann (cyclic prefix) eingesetzt. Dies bietet den Vorteil, dass im Fall einer anzuwendenden Fouriertransformation zur Rücktransformation empfangener Daten in den Zeitbereich der Beginn des Nutzdatenabschnitts mit den Nutzdaten ud nicht exakt erfasst werden muss. Diese Vorzüge sind weiter nutzbar, wenn der zweite Unterabschnitt gp2 des Schutzabschnitts gp mit einer Kopie der letzten Nutzdatenanteile aus dem Nutzdatenabschnitt gefüllt wird.

Gemäß alternativen Ausführungsformen ist es auch möglich, in dem ersten Unterabschnitt gp1 des Schutzabschnitts gp oder in dem gesamten Schutzabschnitt gp oder einem anderen vorgegebenem Bereich dieses Schutzabschnitts gp Signalisierungsdaten s1 in anderer Form einzusetzen. Insbesondere können die Signalisierungsdaten s1 selber codierte Daten sein, so dass mit Hilfe solcher Daten oder codierter Daten konkretere Informationen übertragen werden können, als dies im Fall einer einfachen sinusförmigen Signalisierungskurve der Fall ist, bei welcher lediglich die Frequenz und die Dauer variiert werden können, um auf verschiedene zugeordnete Parameter hinzuweisen.

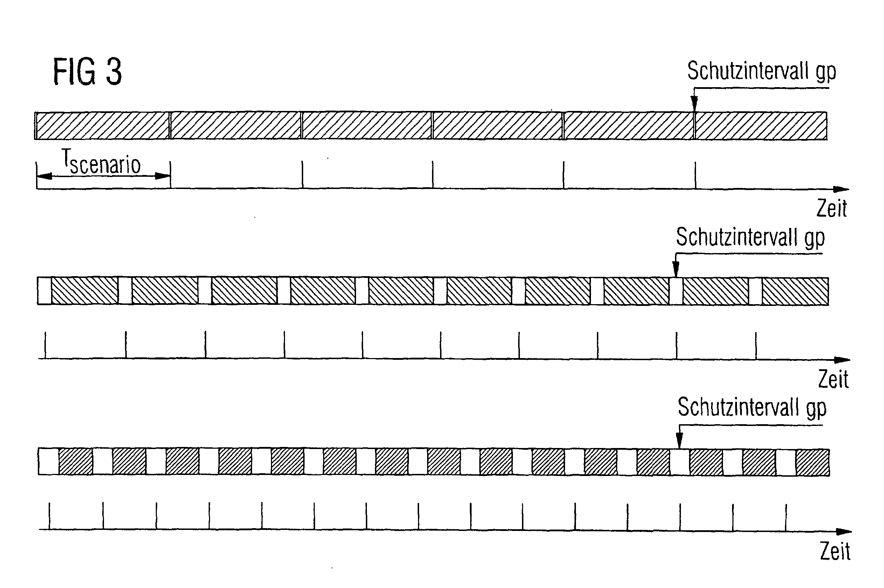

Fig. 3 stellt drei verschiedene Ausführungsformen dar, die durch eine entsprechende Parameterwahl beim Erstellen der Datenfolge d berücksichtigt werden können. Dargestellt ist jeweils eine Vielzahl aufeinanderfolgender Datenfolgen d mit jeweils der Dauer T_{scenario} in einem kontinuierlichen Datenstrom. Dabei wird innerhalb der einzelnen Datenfolgen d jeweils zwischen dem Schutzabschnitt, der auch als guard period gp bezeichnet wird, und dem Nutzdatenabschnitt mit den Nutzdaten ud unterschieden.

Die erste Zeile zeigt dabei eine vorteilhafte Situation für Übertragungen im Innenraumbereich (indoor scenario), wo ein kurzer Schutzabschnitt gp ausreicht, so dass innerhalb eines Übertragungsrahmens der Nutzdatenabschnitt mit den Nutzdaten ud relativ zu dem Schutzabschnitt gp über eine längere Dauer belegt werden kann. Dies hat insbesondere den Vorteil einer höheren effektiven Datenrate für zu übertragende Nutzdaten ud.

In der zweiten dargestellten Situation ist der Schutzabschnitt gp im Vergleich zu dem Schutzabschnitt gp des darüber dargestellten Ausführungsbeispiels größer. Außerdem ist der Schutzabschnitt gp im Vergleich zu dem darüber dargestellten Ausführungsbeispiel auch gegenüber dem Nutzdatenabschnitt größer. Zusätzlich ist bei dieser Ausführungsform die Gesamtdauer T_{scenario} des Übertragungsrahmens bzw. der Datenfolge d verkürzt. Dies hat eine deutlich geringere Kapazität für den Nutzdatenabschnitt mit den Nutzdaten ud zur Folge, erhöht aber die Sicherheit mit Blick auf Übertragungsstörungen, z.B. Reflexionen oder Mehrwegeausbreitung. Dieses Ausführungsbeispiel kann vorteilhaft in städtischen Bereichen eingesetzt werden, in denen eine Kommunikation zwischen verschiedenen Stationen gewünscht ist, die sich in verschiedenen Gebäuden oder Straßenzügen befinden.

Bei einem Einsatz in ländlichen Bereichen mit großen zu überbrückenden Distanzen und entsprechend einer Vielzahl möglicher Störfaktoren ist es erforderlich, für den Schutzabschnitt gp eine noch längere Zeitdauer zur Verfügung zu stellen. Dies reduziert im Vergleich zu den vorstehenden Ausführungsbeispielen und zudem weiter verkürzter Datenfolge d entsprechend den Nutzdatenabschnitt mit den Nutzdaten ud noch stärker, wie dies aus dem dritten dargestellten Beispiel ersichtlich ist. Dargestellt sind somit drei verschiedene Szenarien, an die insbesondere beim Einsatz mobiler Stationen WH eine Anpassung zweckmäßig ist.

Während hier eine Vielzahl von Parametern verändert wurde, wird bei einfacheren Ausführungsformen z.B. nur das Verhältnis der Dauer t(gp) des Schutzabschnitts gegenüber der Dauer t(ud) des Nutzdatenabschnitts variiert.

Alternativ kann ein derartiges Signalisierungsverfahren auch verwendet werden, um auch gänzlich andersartige Parameter zu kennzeichnen, als sie beim vorliegenden Ausführungsbeispiel mit der Kennzeichnung verschiedener Dauern t(gp) der Schutzabschnitte gp gegenüber der Dauer t(ud) der Nutzdatenabschnitte mit den Nutzdaten ud verwendet wurden.

Ausgehend von der Problematik, dass beispielsweise bei OFDM-basierten Kommunikationssystemen die Länge von OFDM-Symbolen bezüglich Nutzanteil und Schutzabschnitt zweckmäßiger Weise an ein zu erwartendes Szenario angepasst werden soll, wird somit eine vorteilhafte Verfahrensweise vorgeschlagen. Als Szenario kann dabei nicht nur eine räumliche Verteilung berücksichtigt werden, wie dies vorstehend beschrieben ist, sondern beispielsweise auch eine übliche Geschwindigkeit mit der sich mobile Stationen WH bewegen. Besonders für sich schnell bewegende Stationen ist es vorteilhaft, ein derart flexibles System zu haben, bei dem die Länge des OFDM-Symbols möglichst flexibel wählbar ist, wobei mit dem beschriebenen Verfahren für die Realisierung ein nur sehr geringer Signalisierungsaufwand erforderlich ist. Der Signalisierungsaufwand bestimmt sich im einfachsten Ausführungsfall durch das entsprechende Einsetzen der Signalisierungsdaten s1 in die zu übertragende Datenfolge d bzw. das entsprechende Erfassen beim Empfänger.

Besonders vorteilhaft ist vor allem im Fall eines OFDM-basierten Kommunikationssystems die Zweiteilung des Schutzabschnitts gp, wobei der erste Unterabschnitt gp1 mit einer festen oder festgelegten Signalform s1 belegt wird und der zweite Unterabschnitt gp2 in üblicher Art und Weise verwendbar bleibt.

Bei der Verwendung fester Signalformen kann in dem Empfänger auf einfache Art und Weise das Zeitintervall T_{scenario} zwischen zwei festen Signalformen bzw. somit der Gesamtdauer der Datenfolge d bestimmt werden. Außerdem kann die Dauer t(gp1) der Signalisierungsdaten s1 bestimmt werden und mit diesen beiden bestimmten Zeiten T_{scenario,} t(gp1) mittels einer fest vorgegebenen Zuordnung zwischen der Länge des Zeitintervalls de und der Länge des OFDM-Symbols auf das jeweils verwendete OFDM-Symbol geschlossen werden. In diesem einfachen Fall ist nicht einmal eine zusätzliche Signalisierung erforderlich.

Hervorzuhebende Schritte bestehen somit in dem Einsetzen von Signalisierungsdaten bzw. einem Signalisierungssignal in dem Schutzabschnitt, wobei eine Zuordnung zu entsprechend beim Erstellen einer Datenfolge gewählten Parametern vorgenommen wird. Vorteilhaft ist ferner die Aufteilung des Schutzabschnitts in verschiedene Abschnitte und die dabei mögliche Messung eines Zeitintervalls bzw. einer Dauer eines Zeitintervalls und/oder Dauer der speziellen Signalisierungsdaten.

Insbesondere mit Hilfe einer festen Signalform innerhalb des Schutzabschnitts ist die Länge des Zeitintervalls des gesamten Szenarios bestimmbar. Dies kann insbesondere die Dauer eines Übertragungsrahmens bzw. die Dauer einer Datenfolge d sein. Nach der empfängerseitigen Bestimmung und Auswertung der Signalisierungsdaten kann somit empfängerseitig z.B. auf die Parameter eines empfangenen OFDM-Symbols geschlossen werden, so dass eine nachgeschaltete Signalverarbeitung in Abhängigkeit davon, insbesondere in Abhängigkeit eines gewählten Szenarios veranlasst werden kann.

Bei den in Fig. 3 dargestellten Szenarien ist jeweils die Dauer T_{scenario} der einzelnen Datenfolgen verschieden. Für ein Innenraum-Szenario können lange Datenfolgen verwendet werden, während für ein ländliches Szenario kurze Datenfolgen bevorzugt werden. Nach dem empfängerseitigen Erfassen einer vorzugsweise festen Signalform als Signalisierungsdaten s1 von zwei aufeinanderfolgenden Datenfolgen d kann empfängerseitig direkt auf die Länge der Datenfolge d geschlossen werden. Außerdem kann empfängerseitig auf Grund der Signalisierungsdaten selber auf weitere Parameter, z. B. OFDM-Symbole, Codierungen oder das Verhältnis der Dauer von Schutzabschnitt gp und Nutzdatenabschnitt geschlossen werden.

## Patentansprüche

1. Verfahren zum Übertragen einer Datenfolge (d) in einem Kommunikationssystem (H2) über eine Schnittstelle (V) zwischen einer senderseitigen (WH, AP) und einer empfängerseitigen Station (AP, WH), bei dem
- die Datenfolge (d) senderseitig aus zumindest einem Schutzabschnitt (gp) und aus zumindest einem Nutzdatenabschnitt mit Nutzdaten (ud) erstellt wird,
**dadurch gekennzeichnet, dass**
- beim Erstellen der Datenfolge (d) zumindest ein eine Dauer oder Länge des Nutzdatenabschnitts mit Nutzdaten (ud) bestimmender anwendungs- und/oder situationsspezifischer Parameter (t(ud)) verwendet wird, und
- in den Schutzabschnitt (gp) senderseitig dem zumindest einen Parameter (t(ud)) zugeordnete Signalisierungsdaten (s1) für eine empfängerseitige Verarbeitung der Datenfolge (d) eingesetzt werden.

2. Verfahren nach Anspruch 1, bei dem
verschiedenen Parametern (t(ud), T_{scenario}) jeweils eine bestimmte Dauer aufeinanderfolgender Signalisierungsdaten (s1) zugeordnet wird.

3. Verfahren nach einem vorstehenden Anspruch, bei dem
die Signalisierungsdaten (s1) als regelmäßiger Signalverlauf eingesetzt werden, insbesondere einem sinus-, dreieck- oder rechteckförmigen Verlauf entsprechen.

4. Verfahren nach einem vorstehenden Anspruch, bei dem verschiedenen Parametern (t(ud), T_{scenario}) jeweils Signalisierungsdaten (s1) mit einer bestimmten Codefolge zugeordnet werden.

5. Verfahren nach einem vorstehenden Anspruch, bei dem
die Zuordnung kommunikationssystemweit definiert wird.

6. Verfahren nach einem vorstehenden Anspruch, bei dem
der zumindest eine bei der Erstellung der Datenfolge (d) verwendete Parameter (T_{scenario}; t(gp1), t(gp2)) die Dauer oder Länge des Schutzabschnitts (gp) mit Signalisierungsdaten (s1) und weiteren Daten (s2) im Schutzabschnitt (gp) bestimmt.

7. Verfahren nach einem vorstehenden Anspruch, bei dem anwendungsspezifisch das Verhältnis der Dauer (t(gp1)) oder Länge zumindest eines bestimmten Teils (gp1) des Schutzabschnitts (gp) relativ zur Dauer bzw. Länge des Nutzdatenabschnitts mit den Nutzdaten (ud) verändert und durch die Signalisierungsdaten (s1) signalisiert wird.

8. Verfahren nach einem vorstehenden Anspruch, bei dem
den verwendeten Signalisierungsdaten (s1) als Parameter eine zu verwendende bzw. verwendete Codierung, insbesondere ein OFDM-Code zugeordnet ist.

9. Vorrichtung für ein Kommunikationssystem, mit
- einer Steuereinrichtung (C),
- einer Speichereinrichtung (S), und
- einer Sende- und/oder Empfangseinrichtung zum Übertragen einer aus zumindest einem Schutzabschnitt (gp) und zumindest einem Nutzdatenabschnitt mit Nutzdaten (ud) bestehenden Datenfolge (d) über eine Schnittstelle (V) zu einer entfernten Station (WH; AP),
**dadurch gekennzeichnet, dass**
in der Speichereinrichtung (S) Speicherraum für eine Zuordnungstabelle zwischen bei der Erstellung der Datenfolge (d) zu verwendenden und eine Dauer oder Länge des Nutzdatenabschnitts mit Nutzdaten (ud) bestimmenden anwendungs- und/oder situationsspezifischen Parametern (t(ud)) und den Parametern (t(ud)) zugeordneten Signalisierungsdaten (s1) vorgesehen ist, und
die Signalisierungsdaten (s1) entsprechend dem verwendeten Parameter (t(ud)) in den Schutzabschnitt (gp) eingesetzt werden.

## Claims

1. Method for transmitting a data sequence (d) in a communication system (H2) via an interface (V) between a transmitter-side (WH, AP) and a receiver-side station (AP, WH), wherein
- the data sequence (d) is generated on the transmitter side from at least one guard period (gp) and at least one payload section containing user data (ud),
**characterised in that**
- at least one application- and/or situation-specific parameter (t(ud)) determining a duration or length of the payload section containing user data (ud) is used during the generation of the data sequence (d), and
- on the transmitter side, signalling data (s1) assigned to the at least one parameter (t(ud)) is inserted into the guard period (gp) for the purpose of receiver-side processing of the data sequence (d).

2. Method according to claim 1, wherein
a specific duration of consecutive signalling data elements (s1) is assigned to different parameters (t(ud), T_{scenario}) in each case.

3. Method according to a preceding claim, wherein
the signalling data (s1) is inserted as a regular signal curve, in particular a sine, triangle or rectangular curve.

4. Method according to a preceding claim, wherein
signalling data (s1) having a specific code sequence is assigned to different parameters (t(ud), T_{scenario}) in each case.

5. Method according to a preceding claim, wherein
the assignment is defined on a communication system-wide basis.

6. Method according to a preceding claim, wherein
the at least one parameter (T_{scenario}; t(gp1), t(gp2)) used during the generation of the data sequence (d) determines the duration or length of the guard period (gp) with signalling data (s1) and further data (s2) in the guard period (gp).

7. Method according to a preceding claim, wherein
the ratio of the duration (t(gp1)) or length of at least one specific part (gp1) of the guard period (gp) relative to the duration or length of the payload section containing the user data (ud) is modified on an application-specific basis and signalled by means of the signalling data (s1).

8. Method according to a preceding claim, wherein
a coding scheme to be used or already used, in particular an OFDM code, is assigned as a parameter to the signalling data (s1) used.

9. Device for a communication system, comprising
- a control device (C),
- a memory device (S), and
- a transmitting and/or receiving device for transmitting a data sequence (d) consisting of at least one guard period (gp) and at least one payload section containing user data (ud) via an interface (V) to a remote station (WH; AP),
**characterised in that**
memory space is provided in the memory device (S) for an assignment table allowing an association between application- and/or situation-specific parameters (t(ud)) to be used during the generation of the data sequence (d) and determining a duration or length of the payload section containing user data (ud) and signalling data (s1) assigned to the parameters (t(ud)), and
the signalling data (s1) is inserted into the guard period (gp) according to the parameter (t(ud)) used.

## Revendications

1. Procédé de transmission d'une séquence de données (d) dans un système de communication (H2) par l'intermédiaire d'une interface (V), entre une station côté émetteur (WH, AP) et une station côté récepteur (AP, WH), dans lequel
- la séquence de données (d) est créée côté émetteur à partir d'au moins une partie de données de protection (gp) et d'au moins une partie de données utiles comprenant des données utiles (ud),
**caractérisé en ce que**
- lors de la création de la séquence de données (d) au moins un paramètre (t (ud))spécifique à l'application et/ou spécifique à la situation, déterminant une durée ou une longueur de la partie de données utiles comprenant des données utiles (ud) est utilisé, et
- **en ce que**, dans la partie de protection (gp) côté émetteur, des données de signalisation (s1) affectées à l'au moins un paramètre (t (ud)) sont utilisées pour un traitement côté récepteur de la séquence de données (d).

2. Procédé selon la revendication 1, dans lequel
une durée déterminée de données de signalisation (s1) successives est respectivement affectée à différents paramètres (t (ud), T_{scenario}).

3. Procédé selon une revendication précédente quelconque, dans lequel
les données de signalisation (s1) sont utilisées comme allure de signal régulière, notamment correspondent à une allure sinusoïdale, triangulaire ou rectangulaire.

4. Procédé selon une revendication précédente quelconque, dans lequel
des données de signalisation (s1) sont respectivement affectées à différents paramètres (t (ud), T_{scenario}) avec une séquence de code déterminée.

5. Procédé selon une revendication précédente quelconque, dans lequel
l'affection est définie dans l'ensemble du système de communication.

6. Procédé selon une revendication précédente quelconque, dans lequel
l' au moins un paramètre (T_{scenario} ; t (gp1), t(gp2)) utilisé lors de la création de la séquence de données (d) détermine la durée ou la longueur de la partie de protection (gp) avec des données de signalisation (s1) et d'autres données (s2) dans la partie de protection (gp).

7. Procédé selon une revendication précédente quelconque, dans lequel,
de manière spécifique à l'application, le rapport de la durée (t (gp1) ou de la longueur d'au moins une partie déterminée (gp1) de la partie de protection (gp) est modifié par rapport à la durée resp. la longueur de la partie de données utiles comprenant les données utiles (ud) et est signalé au moyen des données de signalisation (s1).

8. Procédé selon une revendication précédente quelconque, dans lequel
un codage à utiliser resp. utilisé, notamment un code OFDM, est affecté aux données de signalisation utilisées (s1) comme paramètre.

9. Dispositif pour un système de communication, comprenant
- un dispositif de commande (C),
- un dispositif de mémoire (S), et
- un dispositif d'émission et/ou de réception pour la transmission à une station éloignée (WH ; AP) d'une séquence de données (d), constituée d'au moins une partie de protection (gp) et d'au moins une partie de données utiles comprenant des données utiles (ud), par l'intermédiaire d'une interface (V),
**caractérisé en ce que**
de l'espace mémoire est prévu dans le dispositif de mémoire (S) pour un tableau d'affectation entre des paramètres (t (ud)) spécifiques à l'application et/ou à la situation, à utiliser lors de la création de la séquence de données (d) et déterminant une durée ou une longueur de la partie de données utiles comprenant des données utiles (ud), et des données de signalisation (s1) affectées aux paramètres (t (ud)), et
**en ce que** les données de signalisation (s1) sont insérées dans la partie de protection (gp) selon le paramètre (t (ud)) utilisé.
